Europäisches Patentamt

European Patent Office

Office européen des brevets

(11) Publication number: **0 020 127**
**B1**

## (12) EUROPEAN PATENT SPECIFICATION

(45) Date of publication of patent specification: **11.07.84**     (51) Int. Cl.³: **F 16 D 65/52**

(21) Application number: **80301754.0**

(22) Date of filing: **28.05.80**

(54) Slack adjuster.

(30) Priority: **29.05.79 US 43586**

(43) Date of publication of application:
**10.12.80 Bulletin 80/25**

(45) Publication of the grant of the patent:
**11.07.84 Bulletin 84/28**

(84) Designated Contracting States:
**DE FR GB SE**

(56) References cited:
**FR - A - 783 378**
**US - A - 3 482 663**
**US - A - 3 507 369**
**US - A - 3 526 303**
**US - A - 3 901 357**
**US - A - 3 921 765**
**US - A - 4 071 120**
**US - E - 26 965**

(73) Proprietor: **EATON CORPORATION**
**100 Erieview Plaza**
**Cleveland Ohio 44114 (US)**

(72) Inventor: **Najer, Leonard Maurice**
**27320 Everett**
**Southfield Michigan 48076 (US)**

(74) Representative: **Slight, Geoffrey Charles et al,**
**Graham Watt & Co. Riverhead**
**Sevenoaks Kent TN13 2BN (GB)**

Courier Press, Leamington Spa, England.

## Description

This invention relates to automatic slack adjusters for maintaining a preselected running clearance between the friction members of a selectively engageable friction coupling and in particular relates to automatic slack adjusters for brakes having a running clearance that may be· adjusted by controlled rotation of a shaft, such as for example, cam actuated brakes. More particularly, the present invention relates to automatic slack adjusters of the clearance sensing type for cam actuated brakes.

FR—A—783,378 discloses a slack adjuster for brakes having means to adjust the running clearance.

It is also known from US—A—3,507,369 to provide an automatic slack adjuster for brakes for maintaining a preselected running clearance between brake friction surfaces of at least a fixed minimum magnitude said adjuster including a lever body pivotably connected to a force transmitting member, said lever body containing a worm gear non-rotationally fixed to a shaft of a brake actuation member and a drive mechanism responsive to angular rotation of the lever body beyond a predetermined angular rotation to advance the position of the brake actuation member relative to said lever body, said drive mechanism being pivotably connected to said force transmitting member and adapted to be driven thereby, said preselected running clearance being a function of total lost motion between the force transmitting member and the output of the drive mechanism, there being a predetermined fixed amount of lost motion provided in said drive mechanism to provide at least a minimum total lost motion, the pivotal connection between said drive mechanism and said force transmitting member comprising a first connecting member fixed to said force transmitting member and a second connecting member adapted to drive said drive mechanism, a first bore provided in one of said first and second connecting members and a pivot pin pivotably received in said bore and the other of said connecting members.

The drive mechanism converts the angular rotation of the lever body which occurs when the preselected running clearance between the brake drum and lining increases beyond a preset limit into a rotary motion of the shaft to restore the preselected running clearance between the brake friction surfaces. In some prior art adjusters of this kind, in order to avoid an excessive adjustment, the drive mechanisms have been designed to either yield, declutch or to slip when the torque necessary to continue adjusting the cam by rotation of the shaft exceeds a predetermined limit. Such prior art slack adjusters are generally referred to as clearance or force sensing slack adjusters and further examples thereof may be seen by reference to US—E—26,965; US—A—3,901,357 and US—A—4,071,120.

The prior art clearance sensing types of automatic slack adjusters have been well received and are considered to be an improvement over earlier types of automatic slack adjusters. However, in these prior art clearance sensing slack adjusters the preselected running clearance is a function of total "lost motion" in the linkage and adjuster assembly and is not readily adjustable to compensate for factors such as different types of friction linings, different operating conditions, new linings or the like.

The present invention addresses this problem by providing that, for example, in the construction of US—A—3,507,369, the inner diameter of said first bore is larger than the outer diameter of said pivot pin to establish a maximum clearance therebetween and means is provided adjacent the outer end of the link member to selectively vary the effective clearance between said first bore and said pivot pin, the slack adjuster maintaining said running clearance at said fixed minimum magnitude when the effective clearance between said first bore and said pivot pin is zero.

In accordance with the present invention, the drawbacks of the prior art are overcome by the provision of an automatic clearance sensing slack adjuster for brakes having a running clearance that may be adjusted by controlled rotation of a shaft, such as for example, cam actuated brakes, wherein the preselected running clearance maintained by the adjuster is quickly and easily adjusted without requiring substitution of parts or access to the interior of the adjuster.

One way of carrying out the present invention will now be described, by way of example, with reference to drawings which show one specific embodiment and in which:—

Fig. 1 is a fragmentary view of a cam actuated brake assembly incorporating an automatic slack adjuster of the present invention; and

Fig. 2 is an enlarged fragmentary view, partially in section, of part of the automatic slack adjuster of Fig. 1.

Certain terminology will be used in the following description for convenience in reference only and will not be limiting. The words "upwardly", "downwardly", "rightwardly" and "leftwardly" will designate directions in the drawings to which reference is made. The words "inwardly" and "outwardly" will refer to directions toward and away from, respectively, the geometric center of the device and designated parts thereof. Said terminology will include the words above specifically mentioned, derivatives thereof and words of similar import.

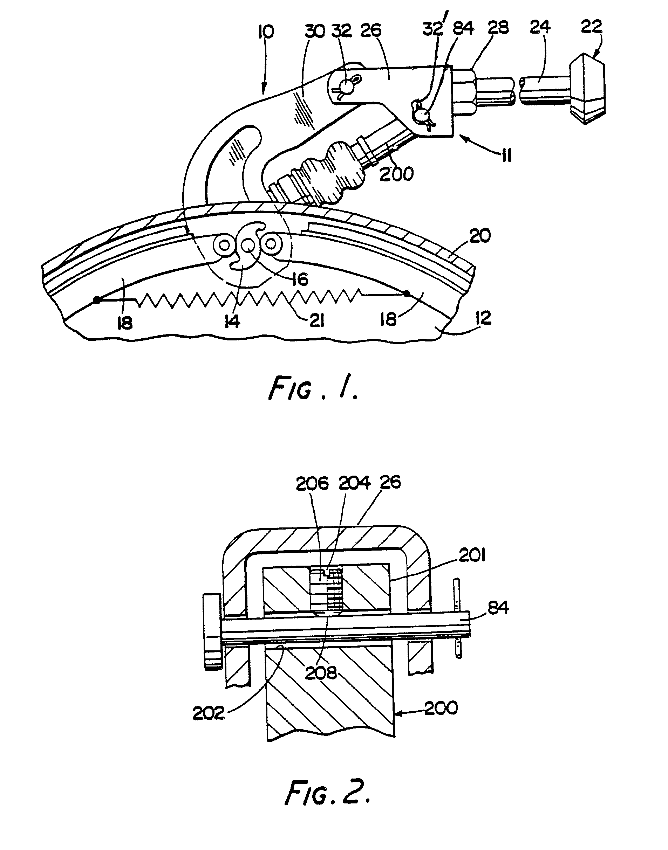

A slack adjuster 10 of the present invention may be seen generally by reference to the drawings. The slack adjuster of the present invention may be adapted for use with brakes having a running clearance that may be selectively adjusted by controlled rotation of a shaft. As may be seen by reference to Fig. 1, the automatic slack adjuster 10 is particularly adapted for use with a cam brake assembly of the type comprising a brake support member 12 which is adapted to receive and support a brake shoe actuating means 14 which is in the form of an S-cam actuator. The cam 14 is non-rotatably secured to a cam shaft 16 which is supported for rotation in the brake support member 12 by a suitable bearing means (not shown). A pair of outwardly expanding brake shoes 18 abut the brake shoe actuating means 14 in such a manner that upon rotation of the brake shoe actuating means 14, the brake shoes 18 are forced generally outwardly into engagement with a cooperating rotatable brake drum 20. A brake shoe return spring 21 is provided to maintain the shoes in contact with the brake shoe actuating means 14. Secured to the cam shaft 16 is a linkage assembly 11 which is adapted to be driven through an angular displacement by means of a power source, such as an air motor 22. Air motor 22 is of a known construction and is mounted to the support member 12 by a bracket which is not shown.

As is well known in this type of assembly, when the brakes are applied, a pressurized fluid is supplied from a central pressure source (not shown) to a chamber of the air motor 22 and said pressurized fluid causes a spring biased diaphragm in the air motor 22 to move an appropriate force transmitting member 24. The movement of the force transmitting member 24 causes the slack adjuster 10, which is a part of the linkage assembly 11, to be pivoted about the axis of the cam shaft 16 with a resultant rotation of the brake shoe actuating means 14 and the outward displacement of the brake shoes 18 into engagement with the brake drum 20.

As is well known and understood in the art, braking of a vehicle by engagement of the brake shoes 18 with the rotating brake drum 20 causes the lining which is secured to the brake shoes 18 to be worn, thereby increasing the clearance between the brake shoe 18 and the brake drum 20. Uncorrected, this clearance would require an increasing angular rotation of the brake shoe actuating means 14 in order to move the linings into engagement with the brake drum 20. The disadvantages of not correcting for the increasing clearance between the brake shoes 18 and the brake drum 20 are known and include loss of effective stroke in the air motor 22 which requires an increasing amount of pressurized fluid in order to actuate the brake shoes 18.

The linkage assembly 11 includes the automatic slack adjuster 10 of the present invention which is of the clearance sensing type. Clearance sensing type automatic slack adjusters are known in the art and may be appreciated in greater detail by reference to US—E—26,965; US—A—3,507,369; US—A—3,901,357 and US—A—4,071,120.

The automatic slack adjuster 10 of the present invention is a mechanism intended to maintain the brake shoes 18 in a proper clearance condition relative to the rotating brake drums 20. The general operation and features of the automatic slack adjuster 10 may be understood from a consideration of US—A—3,507,369. The automatic slack adjuster 10 comprises a yoke or a link member 26 which threadably engages the force transmitting member 24. The position of the yoke 26 is fixed with respect to the force transmitting member 24 by a jam nut 28. The yoke 26 is pivotably secured to a lever body 30 by means of a clevis pin 32 which in turn is secured in place by a cotter pin or the like. The lever body 30 is generally L-shaped in front view and the lower end thereof in Fig. 1 defines a housing and has a first generally cylindrical bore within which a worm gear is located. The worm gear has internal splines and is adapted to co-operate with external splines on the cam shaft 16.

The housing defined by the lever body 30 has a further bore therethrough intersecting the first bore. The axis of the further bore is spaced from and generally perpendicular to the axis of the first bore. Located within the further bore and restrained against relative axial movement relative thereto is a worm. Relative axial movement of the worm relative to the further bore is restrained. The worm is in co-operative engagement with the worm gear and is in driving relationship therewith. The worm shaft has a necked-down portion rotatably mounting a generally tubular drive member. On one end the tubular drive member extends generally radially outwardly and has on the radial periphery thereof a plurality of generally radially extending teeth. Also, partially located within the further bore and supported by conventional means for relative axial but not rotational movement therein is a generally hollow cylindrically shaped piston member which contains a plurality of internal helical splines. The teeth of the tubular drive member are received in the internal helical splines of piston member. The piston member is connected to a rod-like link member 200 at the inner end thereof. The other end 201 of link member 200 is pivotably connected to the yoke 26 by means of a clevis pin 84. Clevis pin 84 is retained in position by means of a cotter pin 32' or hitch pin or the like.

Located at least partially within the further bore of the lever 30 is a one-way drive mechanism for transmitting rotary motion in one direction only from the tubular drive member to the worm shaft. This may comprise first and second helically wound coil spring clutches.

As is well known in the art, helically wound spring clutches have a capacity to transmit a relatively large torque in one direction of rotation and a relatively smaller torque in the other direction of rotation. For example, the first spring clutch may have a capacity to transmit about 24.9 N·m (220 inch pounds) of torque from the tubular drive member to the worm shaft in the direction of rotation tending to decrease the clearance between shoes 18 and drum 20, but only a capacity to transmit about 2.26 N·m (20 inch pounds) of torque in the other direction of rotation. Thus, if a means supplying at least 2.26 N·m (20 inch pounds) of torque tending to resist rotation of the worm shaft in the other direction is present, the spring clutch in combination with such means will define a one-way drive mechanism.

Such a means is the second helically wound spring clutch which is wrapped about an axially extending cylindrical surface of an end plug rotatably supporting the worm shaft in said further bore and a cylindrical surface at the end of the worm shaft. The second spring clutch, in the relaxed condition, has an inner diameter which is slightly smaller than the outer diameter of the cylindrical surface at the end of the worm shaft. The second spring clutch is wound in the opposite direction than is the first spring clutch. The second spring clutch, which is grounded to the lever housing, through the end plug, may have a capacity to resist rotation of the worm shaft relative to the housing in the direction tending to increase clearance between the shoes and drum of 11.3—22.6 N·m (100—200 inch pounds) and a capacity to resist rotation of the worm shaft in the direction tending to decrease the clearance between the shoes and the drums of about 1.7 N·m (15 inch pounds). The first spring clutch will thus provide a significant torque tending to resist rotation of the worm shaft in the direction increasing clearance between the shoes and drums while not preventing the first spring clutch from rotating the worm shaft in the direction decreasing clearance between the shoes and drums. The use of oppositely wound helical spring clutches is known in the clearance sensing automatic slack adjuster art and may be appreciated in greater detail by reference to US—A—3,901,357.

In operation, when the operator of the vehicle actuates the brake system, generally by depressing a pedal, pressurized fluid from a central fluid source is supplied to individual air motors such as that shown at 22 of Fig. 1. When pressurized fluid is supplied to the fluid motor 22, the motion transmitting rod 24 which is attached at one end to the fluid motor 22 and at the other end to the yoke 26 is forced outwardly, to the left in Fig. 1, thereby causing the lever body 30 to be rotated through an arc around the axis of cam shaft 16. This partial rotation of the slack adjuster 10 causes a corresponding rotation of the cam shaft 16 and the brake shoe actuating cam 14. The oppositely disposed brake shoes 18 are forced by the rotation of the cam 14 into engagement with the brake drum 20. When the lever body 30 is caused to rotate in a counter clockwise direction from the position shown in Fig. 1, it will be seen that there is a shortening of the distance between the pivot point of the clevis pin 84 and the axis of the cam shaft 16. The shortening effect is utilized to effect an adjustment of the brake shoe actuating cam 14 in the event that there exists an excess clearance between the brake shoes 18 and the brake drum 20.

As the motion transmitting arm 24 is extended to the left, as is seen in Fig. 1, a counter clockwise rotation of the lever body 30 is begun, and link member 200 begins to move, because of the above-described shortening effect, to move the piston member axially but not rotationally into the further cylindrical bore of the lever 30. This movement of the piston member is converted into a partial rotational movement of the tubular drive member which is transmitted by the one-way torque limiting drive mechanism to the worm shaft and thereon to the worm. This rotational movement of the worm likewise imparts a lesser partial rotational movement to the worm gear. Since the worm gear is non-rotationally secured to the cam shaft 16, the cam shaft and brake shoe actuating cam 14 secured thereto are likewise given a partial rotational movement with respect to the lever body 30 in response to movement of the piston member into the further cylindrical bore.

It can be seen, therefore, that during each application of the brakes and the resultant rotation of the lever 30 the piston member will be forced into the further cylindrical bore with a resultant rotation imparted to the tubular drive member upon engagement of its helical splines with the teeth of the tubular drive member. However, the one way drive mechanism provides a torque limiting connection between the tubular drive member and the worm shaft. Therefore, rotation of tubular drive member will result in a corresponding rotation of the worm shaft through the one-way drive mechanism only so long as the torque necessary to cause rotation of the worm shaft is below the predetermined limit torque of the one-way drive mechanism. The torque transmitting capability of the torque limiting one-way drive mechanism is sufficient to cause rotation of the worm shaft so long as the brake shoes 18 remain out of firm contact with the brake drums 20. Thus, as the brake shoes 18 are brought into contact with the brake drums 20 the torque necessary to advance the brake shoe actuating means 14 rises with increased travel of the actuating member 24. The highly increased torque necessary to advance the brake shoe actuating means 14 beyond the point where the brake shoes 18 firmly contact the brake drums 20 increases the torque necessary to advance the worm shaft above the torque transmitting capacity of the one-way drive mechanism. Therefore, it can be seen that once the brake shoes 18 have been brought into contact with the brake drums 20, the rapid increase in the torque necessary to advance the brake shoe actuating means 14, will increase the torque necessary to rotate the worm shaft above the torque transmitting capacity of the one-way drive mechanism and further rotation of the lever 30 as described above will result only in the slippage of the one-way drive mechanism with respect to one or the other of the tubular drive member or the worm shaft.

The provision of a torque limiting one-way drive mechanism with a limited torque transmitting capability allows for adjustment of the brake shoe actuating means 14 on the brake application stroke and further allows the brake adjusting mechanism to sense brake lining clearance due to wear and make adjustments therefore while distinguishing that brake lining clearance from brake system distortion caused by continued rotation of the brake shoe actuating means 14 due to continued extension of the motion transmitting arm 24 and the resultant continued rotation of the linkage assembly 30 and the cam shaft 16. The use of such a one-way torque limited torque transmitting mechanism can be appreciated in greater detail by reference to US—A—3,507,369 and US—A—3,901,357.

It is, of course, recognized that it is necessary to maintain a predetermined fixed running clearance between the brake shoes 18 and the brake drum 20 in order to allow free running of the vehicle wheels during non-braking operations of vehicle. It is known that frequent usage of the brake will result in increased temperature in the brake drum and brake shoes. This temperature rise will cause a well known thermal diametral expansion of both the brake drum and brake shoes, the expansion under some conditions being greater in the drum. The brake adjuster 10 is therefore designed to adjust only to a corresponding predetermined clearance. This clearance being sufficient to prevent drag of the brake when the brake drum and brake shoes cool and contract to their original diameters. In the slack adjuster 10 of the present invention, this predetermined clearance is maintained by providing a predetermined amount of "lost motion" between the force transmitting member 24 and the tubular drive member. That is, a predetermined amount of axial movement of the force transmitting member 24 and/or rotational movement of lever body 30 will occur prior to the tubular drive member being caused to rotate by the spline connection between the piston member and the tubular drive member.

The magnitude of the running clearance is, therefore, a function of the "lost motion" between the axial force transmitting member 24 with corresponding rotational movement of lever 30 and the application of the rotative force to tubular force transmitting member by the splines of the piston member. In certain situations, it is highly desirable that a simple and inexpensive means be provided whereby the "lost motion" is adjustable. Such situations can arise when new brake linings are installed and it is desired to increase the "lost motion" until such time as the brake linings are worn in and/or to compensate for the use of different friction materials and/or operating conditions.

Through bore 202 which receives clevis pin 84 is of a substantially larger inner diameter than the outer diameter of clevis pin 84. This will, of course, provide an additional amount of backlash or clearance between the yoke 26 and the link member 200 and thereby increase the "lost motion" in the slack adjuster. An internally threaded bore 204, intercepting bore 202, is provided in the end of the link member 200. A set screw 206 is threadably received in the bore 204. Preferably the threads of screw 206 will be self-lockingly engaged with the threads of bore 204 to assure that screw 206 will remain properly positioned in bore 204. The inner end 208 of set screw 206, which may be of an antifriction material such as "Teflon" (Registered Trade Mark), may adjustably extend radially into the bore 202. Under normal operating conditions, the end 208 of set screw 206 will extend into the bore 202 to engage the clevis pin 84 and thereby effectively decrease the effective inner diameter of bore 202 to provide the normal amount of "lost motion" desired when operating with "broken-in" brake linings. However, should it be desired to increase the "lost motion" due to installation new brake linings, or the like, the end 208 of set screw 206 may simply be backed out entirely or partially from bore 202 to provide a larger effective interior diameter of bore 202 and thereby increase the "lost motion" in the system.

**Claims**

1. An automatic slack adjuster (10) for brakes for maintaining a preselected running clearance between brake friction surfaces (18, 20) of at least a fixed minimum magnitude said adjuster (10) including a lever body (30) pivotably connected to a force transmitting member (24), said lever body (30) containing a worm gear (38) non-rotationally fixed to a shaft (16) of a brake actuation member (14) and a drive mechanism responsive to angular rotation of the lever body (30) beyond a predetermined angular rotation to advance the position of the brake actuation member (14) relative to said lever body (30), said drive mechanism being pivotably connected to said force transmitting member (24) and adapted to be driven thereby, said preselected running clearance being a function of total lost motion between the force transmitting member (24) and the output of the drive mechanism, there being a predetermined fixed amount of lost motion provided in said drive mechanism to provide at least a minimum total lost motion, the pivotal connection (26, 200, 84) between said drive mechanism and said force transmitting member (24) comprising a first connecting member (26) fixed to said force transmitting member (24) and a second connecting member (200) adapted to drive said drive mechanism, a first bore (202) provided in one of said first and second connecting members and a pivot pin (84) pivotably received in said bore and the other of said connecting members, characterized in that the inner diameter of said first bore (202) is larger than the outer diameter of said pivot pin (84) to establish a maximum clearance therebetween and means (206, 208) is provided adjacent the outer end (201) of the link member (200) to selectively vary the effective clearance between said first bore (202) and said pivot pin (84), the slack adjuster maintaining said running clearance at said fixed minimum magnitude when the effective clearance between said first bore (202) and said pivot pin (84) is zero.

2. A slack adjuster as claimed in claim 1, characterised in that the first bore (202) is provided in the second connecting member (200) and said second connecting member (200) includes a second bore (204) extending generally radially from said first bore (202) to the exterior of said second connecting member, said second bore being internally threaded and that an externally threaded member (206) is threadedly received in said second bore (204), one end (208) of said externally threaded member (206) being adapted to selectively extend into said first bore to selectively vary the effective clearance between said first bore and said pivot pin (84).

3. A slack adjuster as claimed in claim 2, characterised in that said externally threaded member (206) is a set screw adapted to be self-lockingly retained in said second bore (204).

4. A slack adjuster as claimed in claim 2 or claim 3, characterised in that said one end (208) of said externally threaded member (206) is provided with an antifriction surface.

5. A slack adjuster as claimed in any one of the preceding claims and for use with cam actuated brakes characterised in that the brake actuation member is a cam (14) and that the lever body (30) is pivotable about the axis of the cam, the force transmitting member (24) being a substantially linear actuation member.

6. A slack adjuster as claimed in claim 5, characterised in that said drive mechanism is ineffective to advance said cam (14) when the forces required to advance said cam exceed a predetermined force.

7. A slack adjuster as claimed in claim 5 or claim 6, characterised in that said linear actuation member is a rod (24) reciprocally driven by an air motor (22), said first connecting member is a yoke (26) pivotably mounted to said rod (24) and said second connecting member is a link member (200) pivotably connected to said yoke (26) and substantially axially movable in a bore in said lever body (30).

## Patentansprüche

1. Automatische Nachstellvorrichtung (10) für Bremsen, zum Aufrechterhalten eines vorbestimmten Betriebsspaltes wenigstens fester Minimalgröße zwischen zwei Reibungs-Bremsflächen (18, 20), mit einem schwenkbar mit einem Kraftübertragungselement (24) verbundenen Hebelglied (30), das ein drehfest auf einer Welle (16) eines Bremsbetätigungselementes (14) befestigtes Schneckenrad (38) aufweist und mit einem bei einer Winkeldrehung des Hebelgliedes (30) über einen vorbestimmten Drehwinkel hinaus das Bremsbetätigungselement (14) bezüglich des Hebelgliedes (30) vorbewegenden Antriebsmechanismus, welcher schwenkbar mit dem Kraftübertragungselement (24) verbunden und durch dieses antreibbar ist, wobei der vorbestimmte Betriebsspalt eine Funktion des zwischen dem Kraftübertragungselement (24) und dem Ausgang des Antriebsmechanismus vorhandenen Gesamtspieles ist und der Antriebsmechanismus ein wenigstens einen Minimalwert des Gesamtspieles ergebendes festes Spiel vorbestimmter Größe enthält und wobei außerdem die Schwenkverbindung (26, 200, 84) zwischen dem Antriebsmechanismus und dem Kraftübertragungselement (24) ein mit dem Kraftübertragungselement (24) fest verbundenes erstes Verbindungsglied (26) und ein zum Antrieb des Antriebsmechanismus dienendes zweites Verbindungsglied (200) aufweist und eine erste Bohrung (202) in einem der beiden Verbindungsglieder sowie ein in dieser Bohrung (202) und in dem anderen Verbindungsglied schwenkbar gelagerter Schwenkzapfen (84) vorgesehen sind, dadurch gekennzeichnet, daß der Innendurchmesser der ersten Bohrung (202) größer als der Außendurchmesser des Schwenkzapfens (84) und dadurch ein maximales Spiel zwischen diesen Teilen ausgebildet ist, daß im Bereiche des äußeren Endes des Verbindungsgliedes (200) eine Einrichtung (206, 208) zur wahlweisen Veränderung des wirksamen Spieles zwischen der ersten Bohrung (202) und dem Schwenkzapfen (84) vorgesehen ist und daß durch die Nachstellvorrichtung (10) der Betriebsspalt auf dem festen Minimalwert gehalten ist, wenn das wirksame Spiel zwischen der ersten Bohrung (202) und dem Schwenkzapfen (84) Null ist.

2. Nachstellvorrichtung nach Anspruch 1, dadurch gekennzeichnet, daß die erste Bohrung (202) in dem zweiten Verbindungsglied (200) angeordnet ist und das zweite Verbindungsglied (200) eine im wesentlichen radial von der ersten Bohrung (202) zur Außenseite des zweiten Verbindungsgliedes verlaufende zweite Bohrung (204) aufweist und die zweite Bohrung (204) mit einem Innengewinde versehen ist und daß in die zweite Bohrung (204) ein mit einem Außengewinde versehenes Element (206) eingeschraubt ist und ein Ende (208) des mit dem Außengewinde versehenen Elementes (206) dazu eingerichtet ist unter wahlweiser Veränderung des wirksamen Spieles zwischen der ersten Bohrung (202) und dem Schwenkzapfen (84) in die erste Bohrung (202) zu ragen.

3. Nachstellvorrichtung nach Anspruch 2, dadurch gekennzeichnet, daß das mit dem Außengewinde versehene Element (206) eine selbsthemmend in die zweite Bohrung (204) eingesetzte Stellschraube ist.

4. Nachstellvorrichtung nach Anspruch 2 oder 3, dadurch gekennziechnet, daß das Ende (208) des mit dem Außengewinde versehenen Elementes (206) eine reibungsvermindernde Oberfläche aufweist.

5. Nachstellvorrichtung nach einem der vorhergehenden Ansprüche zur Verwendung bei nockenbetätigten Bremsen, dadurch gekennzeichnet, daß das Bremsbetätigungselement ein Nocken (14) und das Hebelglied (30) um die Achse des Nockens schwenkbar ist und daß das Kraftübertragungselement (24) ein im wesentlichen lineares Betätigungsorgan ist.

6. Nachstellvorrichtung nach Anspruch 5, dadurch gekennzeichnet, daß der Antriebsmechanismus im Sinne der Vorbewegung des Nockens (14) unwirksam ist, wenn die zur Vorbewegung des Nockens erforderlichen Kräfte einen vorbestimmten Kraftwert übersteigen.

7. Nachstellvorrichtung nach Anspruch 5 oder 6, dadurch gekennzeichnet, daß das lineare Betätigungsorgan eine durch einen Luftmotor (22) hin- und hergehend angetriebene Stange (24) ist, daß das erste Verbindungsglied ein auf der Stange (24) schwenkbar gelagerter Bügel (26) ist und daß das zweite Verbindungsglied ein mit dem Bügel (26) schwenkbar verbundenes Verbindungsstück (200) ist, das in einer Bohrung des Hebelgliedes (30) im wesentlichen axial beweglich ist.

**Revendications**

1. Un dispositif (10) de rattrapage automatique du jeu pour freins afin de maintenir un jeu de fonctionnement présélectionné entre des surfaces de friction (18, 20) du frein ayant au moins une grandeur minimale fixe, ledit dispositif (10) de réglage comportant un corps (30) de levier monté pivotant sur un organe (24) de transmission de force, ledit corps (30) de levier contenant un engrenage à vis sans fin solidaire en rotation d'un arbre (16) d'un organe (16) d'actionnement du frein et un mécanisme d'entraînement fonctionnant en réponse à une rotation angulaire prédéterminée dudit corps (30) de levier au-delà d'une rotation angulaire prédéterminée pour faire avancer la position de l'organe (14) d'actionnement du frein par rapport audit corps (30) de levier, ledit mécanisme d'entraînement étant articulé audit organe (24) de transmission de force et conçu pour être entraîné, de ce fait, ledit jeu de fonctionnement présélectionné étant une fonction de la perte de mouvement totale entre l'organe (24) de transmission de force et l'organe de sortie du mécanisme d'entraînement, une quantité fixe prédéterminée de perte de mouvement étant assurée dans ledit mécanisme d'entraînement pour fournir au moins une perte de mouvement totale minimale, l'articulation (26, 200, 84) entre ledit mécanisme d'entraînement et ledit organe (24) de transmission de force comprenant un premier organe de liaison (26) fixé audit organe (24) de transmission de force et un second organe de liaison (200) conçu pour entraîner ledit mécanisme d'entraînement, un premier alésage (202) formé dans l'un desdits premier et second organes de liaison et une tige-pivot (84) étant reçue dans ledit alésage et l'autre desdits organes de liaison, caractérisé en ce que le diamètre intérieur dudit premier alésage (202) est plus grand que le diamètre extérieur de ladite tige-pivot (84) pour établir un jeu maximal entre eux de des moyens (206, 208) sont prévus adjacents à l'extrémité extérieure (201) de l'organe de liaison (200) pour faire varier sélectivement le jeu utile entre ledit premier alésage (202) et ladite tige-piston (84), le dispositif de rattrapage du jeu maintenant ledit jeu de fonctionnement à ladite grandeur minimale fixe lorsque le jeu utile entre ledit premier alésage (202) et ladite tige-pivot (84) est nul.

2. Un dispositif de rattrapage du jeu tel que revendiqué dans la revendication 1, caractérisé en ce que le premier alésage (202) est formé dans le second organe de liaison (200) et ledit second organe de liaison (200) comporte un second alésage (204) qui s'étend dans l'ensemble radialement depuis ledit premier alésage (206) jusqu'à l'extérieur dudit second organe de liaison, ledit second alésage étant intérieurement fileté et en ce qu'un organe extérieurement fileté (206) est vissé dans ledit second alésage (204), une première extrémité (208) dudit organe (206) extérieurement fileté étant agencée de manière à pénétrer sélectivement dans ledit premier alésage pour faire varier sélectivement le jeu utile entre ledit premier alésage et ladite tige-pivot (84).

3. Un dispositif de rattrapage du jeu tel que revendiqué dans la revendication 2, caractérisé en ce que ledit organe (206) extérieurement fileté est une vis de réglage agencée de manière à être retenue de façon auto-freinée dans ledit second alésage (204).

4. Un dispositif de rattrapage du jeu tel que revendiqué dans la revendication 2 ou la revendication 3, caractérisé en ce que ladite première extrémité (208) dudit organe (206) extérieurement fileté est munie d'une surface antifriction.

5. Un dispositif de rattrapage du jeu tel que revendiqué dans l'une quelconque des revendications précédentes et conçu pour être utilisé avec des freins actionnés par une came, caractérisé en ce que l'organe d'actionnement du frein est une came (14) et en ce que le corps (30) de levier est monté pivotant autour de l'axe de la came, l'organe de transmission de force étant un organe d'actionnement sensiblement linéaire.

6. Un dispositif de rattrapage du jeu tel que revendiqué dans la revendication 5, caractérisé en ce que ledit mécanisme d'entraînement est inefficace pour faire avancer ladite came (14) lorsque les forces requises pour faire avancer ladite came dépassent une force prédéterminée.

7. Un dispositif de rattrapage du jeu tel que revendiqué dans la revendication 5 ou la revendication 6, caractérisé en ce que ledit organe d'actionnement linéaire est une tige (24) entraînée en va-et-vient par un moteur pneumatique (22), ledit premier organe de liaison est un étrier (26) monté pivotant sur ladite tige (24) et ledit second organe de liaison est un organe de liaison (200) articulé audit étrier (26) et mobile sensiblement axialement dans un alésage formé dans ledit corps (30) de levier.

0 020 127

FIG . 1.

FIG. 2.